(19) **Europäisches Patentamt**
**European Patent Office**
**Office européen des brevets**

(11) **EP 4 531 241 A1**

(12) **EUROPÄISCHE PATENTANMELDUNG**

(43) Veröffentlichungstag:
02.04.2025 Patentblatt 2025/14

(21) Anmeldenummer: 24195853.7

(22) Anmeldetag: **22.08.2024**

(51) Internationale Patentklassifikation (IPC):
*H02J 50/12* (2016.01) *H02J 50/80* (2016.01)

(52) Gemeinsame Patentklassifikation (CPC):
**H02J 50/12; H02J 50/80**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **13.09.2023 DE 102023124747**

(71) Anmelder: **Universität Stuttgart Körperschaft des
Öffentlichen Rechts
70174 Stuttgart (DE)**

(72) Erfinder:
• **Ye, Weizhou**
**70569 Stuttgart (DE)**
• **Götz, Tobias**
**70569 Stuttgart (DE)**
• **Parspour, Nejila**
**70569 Stuttgart (DE)**

(74) Vertreter: **RGTH
Patentanwälte PartGmbB
Neuer Wall 10
20354 Hamburg (DE)**

(54) **VORRICHTUNG UND VERFAHREN ZUR KONTAKTLOSEN INDUKTIVEN ENERGIEÜBERTRAGUNG**

(57) Es wird eine Vorrichtung (10) zur kontaktlosen induktiven Energieübertragung mit einer ersten Seite (10a) und einer zweiten Seite (10b vorgeschlagen, wobei die Vorrichtung (10) auf der ersten Seite (10a) und auf der zweiten Seite (10b) jeweils eine Energieübertragungsspule (11) und eine Synchronisationsspule (12) umfasst. Die Energieübertragungsspulen (11) sind jeweils zur induktiven Übertragung und zum Empfangen von Energie ausgebildet, während die Synchronisationsspulen (12) jeweils zur induktiven Übertragung und zum Empfangen eines Synchronisationssignals ausgebildet sind, sodass die erste Seite (10a) und die zweite Seite (10b) als Sendeseite (10c) zum Übertragen kontaktlos zu übertragener Energie und als Empfangsseite (10d) zum Empfangen kontaktlos übertragener Energie ausgebildet sind.

Fig. 1

EP 4 531 241 A1

**Beschreibung**

Die vorliegende Erfindung betrifft eine Vorrichtung sowie ein Verfahren zur kontaktlosen induktiven Energieübertragung nach den unabhängigen Ansprüchen.

**Stand der Technik**

Aus dem Stand der Technik ist die kontaktlose Energieübertragung mittels Induktion grundsätzlich bekannt. Dabei wird ein Signal einer Sendeseite in ein alternierendes Magnetfeld umgewandelt, das auf einer Empfangsseite durch Induktion empfangen wird. Die auf diese Art induzierte Spannung steht im direkten Verhältnis zur Stärke und der Veränderung des Magnetfeldes. Dabei kann auf der Empfangsseite eine aktive Gleichrichterschaltung vorhanden sein, um die erzeugte Wechselspannung in Gleichspannung umzuwandeln.

Im Stand der Technik ist ebenfalls bekannt die Ansteuerung der Gleichrichterschaltung auf der Empfangsseite mit der Alternierung des Wechselfeldes zu synchronisieren. Dies wird auf Basis der gemessenen Stromstärke auf der Empfangsseite erreicht, wozu allerdings eine komplexe und kostenintensive Auslegung notwendig ist. Bspw. ist ein Strommesskreis mit entsprechenden Verstärkern und Analog-Digital-Wandlern notwendig. Ferner besteht das Risiko einer Instabilität des drahtlosen Energieübertragungssystems aufgrund der Stromsynchronisierung. Bereits aus diesem Grund müssen somit kostenintensive Signalverarbeitungsalgorithmen zur Kompensation eingesetzt werden.

**Aufgabe; Lösung; Vorteile**

Der vorliegenden Erfindung liegt die Aufgabe zugrunde, eine Vorrichtung sowie ein Verfahren zur kontaktlosen induktiven Energieübertragung bereitzustellen, die eine effiziente und kostengünstige Energieübertragung erlaubt.

Gelöst wird die vorgenannte Aufgabe durch eine Vorrichtung zur kontaktlosen induktiven Energieübertragung, wobei die Vorrichtung eine erste Seite und eine zweite Seite umfasst, wobei auf jeder Seite eine Energieübertragungsspule und eine Synchronisationsspule angeordnet sind.

Jede Energieübertragungsspule ist sowohl zum Senden als auch zum Empfangen von Energie ausgebildet, während jede Synchronisationsspule zur induktiven Übertragung und zum Empfang eines Synchronisationssignals ausgebildet ist. Die zu sendende oder zu empfangende Energie ist vorzugsweise ein Energiesignal. Dieses kann bspw. durch Überlagerung auch Daten umfassen. Auch das Synchronisationssignal ist vorzugsweise ein Energiesignal.

Die Energie wird induktiv übertragen. Im Detail kann jede Energieübertragungsspule ein alternierendes Magnetfeld auf Basis eines Wechselstromsignals erzeugen und ein alternierendes Magnetfeld empfangen und auf Basis des empfangenden Magnetfelds ein Wechselspannungssignal erzeugen.

Ferner wird das Synchronisationssignal induktiv übertragen. Die Synchronisationsspulen können auf Basis eines Wechselstromsignals ein alternierendes Magnetfeld erzeugen und ein alternierendes Magnetfeld empfangen und auf Basis des empfangenden Magnetfelds ein Wechselspannungssignal erzeugen.

Durch die Anordnung sowohl einer Energieübertragungsspule als auch einer Synchronisationsspule auf beiden Seiten kann jede Seite als Sendeseite zum Übertragen kontaktlos zu übertragender Energie und als Empfangsseite zum Empfangen kontaktlos übertragener Energie agieren. Die Rollen der Sendeseite, in anderen Worten der Primärseite, und der Empfangsseite, in anderen Worten der Sekundärseite, sind somit keiner konkreten Seite der Vorrichtung zugeordnet, sondern können frei gewählt werden. Es ist die Trennung zwischen der Primärseite und der Sekundärseite beziehungsweise der Sendeseite und der Empfangsseite aufgelöst, sodass beide Seiten der Vorrichtung symmetrisch mit einer Kombination von Synchronisationsspule und Energiespule versehen sind. Die Vorrichtung ist bidirektional ausgelegt und ermöglicht eine besonders flexible Verwendung.

Insbesondere umfassen die Synchronisationsspulen jeweils eine erste Seite und eine zweite Seite, wobei jede Synchronisationsspulen derart geformt ist, dass ein auf der ersten Seite erzeugtes magnetisches Feld eine unterschiedliche magnetische Polarität aufweist als ein auf der zweiten Seite erzeugtes magnetisches Feld. Insbesondere kann jede Seite mindestens eine Windung umfassen. Die mindestens eine Windung der beiden Seiten sind zumindest im Wesentlichen in einer Ebene angeordnet und umschließen jeweils eine Fläche. Diese eingeschlossene Fläche auf jeder Seite kann zumindest im Wesentlichen gleich groß ausgelegt sein.

Die Synchronisationsspule ist insbesondere im entsprechenden magnetischen Feld der Energieübertragungsspule derselben Seite der Vorrichtung angeordnet, sodass bei Energieübertragung mittels der Energieübertragungsspulen auf beiden Seiten der Synchronisationsspule eine magnetische Spannung induziert und somit ein Strom erzeugt wird. Es kann jede Synchronisationsspule insbesondere derart ausgebildet sein, dass die durch die Energieübertragungsspule derselben Seite induzierte Spannung Null beträgt, d.h. sich die Spannungsanteile der unterschiedlichen Seiten ausgleichen. Dies dient dazu, den Einfluss der Energieübertragungsspule auf das erzeugte Signal der Synchronisationsspule, in anderen Worten den Cross Talk, wesentlich zu reduzieren und somit die Synchronisation zuverlässiger zu gestalten. Dabei kann die von den Windungen der unterschiedlichen Seiten der Synchronisationsspule eingefasste Fläche durch eine Veränderung einer Breite und/oder einer Länge der Windung in der entsprechenden Ebene angepasst werden, sodass eine mittels eines Widerstandes gemessene Spannung Null beträgt.

Die erste Seite und die zweite Seite der Vorrichtung umfassen vorzugsweise jeweils einen eine leistungselektronische Einheit, der dazu ausgebildet ist, ein Gleichspannungssignal auf der Sendeseite in ein Wechselstromsignal umzuwandeln und ein Wechselspannungssignal auf der Empfangsseite in ein Gleichspannungssignal umzuwandeln. Bei der leistungselektronischen Einheit handelt es sich vorzugsweise einen Konverter. Die leistungselektronische Einheit jeder Seite kann somit abhängig davon, ob die jeweilige Seite als Empfangsseite oder als Sendeseite ausgebildet ist, beide oben genannten Funktionen übernehmen. Jede leistungselektronische Einheit kann als aktive Gleichrichterschaltung, insbesondere als Vollbrückenwandler, mit mehreren Schaltern ausgebildet sein. Er umfasst vor allem vier Schalter, die jeweils als Transistor ausgebildet sein können. Fungiert die Seite als Empfangsseite, agiert die leistungselektronische Einheit als aktiver Gleichrichter, während, falls die Seite als Sendeseite fungiert, die leistungselektronische Einheit als Inverter dient.

Das Synchronisationssignal, das mittels der Synchronisationsspulen übertragen und empfangen wird, dient zur Synchronisierung von Steuersignalen der leistungselektronischen Einheit, sprich von Steuersignalen zur Ansteuerung der leistungselektronischen Einheit, auf der Empfangsseite der Vorrichtung bezüglich Steuersignalen der leistungselektronischen Einheit auf der Sendeseite der Vorrichtung. Insbesondere bezieht sich die Synchronisation auf eine Schaltfrequenz der leistungselektronischen Einheit auf der Empfangsseite in Bezug auf eine Schaltfrequenz der leistungselektronischen Einheit auf der Sendeseite. Eine Synchronisation ist somit erreicht, wenn sich die Schaltfrequenzen entsprechen und somit identisch sind.

Im Detail können die Schalter mit jeweiligen Steuersignalen angesteuert werden, sodass alle Spannungsteile des Wechselspannungssignals in das Gleichspannungssignal einfließen und eine effiziente Energieübertragung stattfindet. Jedes Steuersignal kann einem Schalter zugeordnet sein. Und zwar können die Schalter jeder leistungselektronischen Einheit abwechselnd abhängig von der entsprechenden Wechselspannung angesteuert, um alle Signalanteile zu berücksichtigen. In anderen Worten beziehen sich die Steuersignale auf die Zeitpunkte, zu denen die Schalter der leistungselektronischen Einheit umgeschaltet werden. Jedem Schalter kann eine Schaltsequenz zugeordnet sein. Diese ergibt sich als Inverses des zeitlichen Abstandes aufeinander folgender Steuersignale in Bezug auf diesen Schalter. Es werden vor allem das Steuersignal für einen Schalter auf der Empfangsseite mit dem Steuersignal des Schalters auf der Senderseite, der sich auf der gleichen Position der leistungselektronischen Einheit bspw. des Vollbrückenwandlers befindet, hinsichtlich deren Schaltfrequenz synchronisiert. Dies gilt für alle Schalter auf der Empfangsseite. Während somit die tatsächlichen Umschaltzeitpunkte der Schalter auf der Sendeseite und der Empfangsseite zeitlich versetzt sein können, soll deren Frequenz nach Synchronisation identisch sein.

Insbesondere umfasst jede Seite eine jeweilige Signalquelle für das Erzeugen von Energie, vorzugsweise einem Energiesignal, und eine jeweilige Signalquelle für das Erzeugen des Synchronisationssignals. Die Signalquelle zum Erzeugen von Energie kann eine einfache Spannungsquelle sein. Zum Erzeugen des Synchronisationssignals kann ein Schaltkreis vorgesehen sein, der mindestens einen Digital-Analog-Wandler und vorzugsweise einen Verstärker und/oder einen Frequenzfilter und/oder eine Frequenzweiche, bspw. einen Diplexer oder einen Duplexer, umfassen kann. Der Digital-Analog-Wandler kann ein Signal mit verschiedenen Frequenzanteilen ausgeben. Der Digital-Analog-Wandler weist eine Aktualisierungsrate fs aus, die die Frequenz angibt, mit welcher der Output, sprich die Signalanteile, aus denen das Synchronisationssignals zusammengesetzt ist, ausgegeben wird. Das Synchronisationssignal besteht vorzugsweise aus unterschiedlichen Frequenzanteilen. Frequenzfilter und/oder Frequenzweichen sind optionale Komponenten mit denen unterschiedliche Frequenzanteile zusammengeschaltet oder aufgespalten werden können. Ein System mit solchen Komponenten auf beiden Seiten bietet die Möglichkeit auszuwählen, welche Seite als Referenz der Synchronisation dienen soll. Außerdem, durch die gegenseitige und gleichzeitige Synchronisation beider Seiten, wird die Frequenz als auch die Genauigkeit der Synchronisation erhöht.

Ferner kann jede Seite einen, vorzugsweise kapazitiven, Kompensationsschaltkreis, vor allem einen LCC-Kompensationsschaltkreis, aufweisen. Dieser kann vor allem einen induktiven Widerstand und zwei Kondensatoren aufweisen, wobei der induktive Widerstand und der erste Kondensator in Reihe mit der Energieübertragungsspule und der zweite Kondensator parallel zur Energieübertragungsspule angeordnet sind. Es ist somit der zweite Kondensator als Parallelkondensator parallel zur Energieübertragungsspule angeordnet. Der Kompensationsschaltkreis dient dazu die Kopplung der beiden Energieübertragungsspulen und somit den Wirkungsgrad der Übertragung zu erhöhen. Insbesondere wird die Blindleistung kompensiert.

Vorzugsweise ist somit die gesamte Vorrichtung vollständig symmetrisch ausgebildet und dient als bidirektionales Energieübertragungssystem.

Gemäß einem weiteren Aspekt bezieht sich die Erfindung auf ein Verfahren zur kontaktlosen induktiven Energieübertragung, wobei das Verfahren eine oben beschriebene Vorrichtung verwendet. Insbesondere wird bei dem Verfahren die erste Seite als Sendeseite und die zweite Seite als Empfangsseite verwendet, wobei auf der Sendeseite ein moduliertes periodisches Synchronisationssignal STx der Sendeseite für in Abständen folgende Zeiträume erzeugt wird. Insbesondere handelt es sich um regelmäßig Abstände. Das heißt, es liegen zeitlich begrenzte und voneinander beanstandete Zeiträume vor, in denen ein moduliertes periodisches Synchronisationssignal erzeugt und mittels der Synchronisationsspule induktiv übertragen wird.

Insbesondere ist das Synchronisationssignal STx entsprechend der folgenden Gleichung moduliert:

$$s_{\text{Tx}}(n + k \cdot N_{\text{sync}}) = s_{\text{Tx,basic}}(n) \text{ für } k \in \left[0, N_{\text{repeat}} - 1\right]$$

$$(1)$$

wobei

$$s_{\text{Tx,basic}}(n) = \Sigma_{i=1}^{M_f} A_i \sin\left(\omega_i \frac{n}{f_s} + \varphi_i\right) \text{ for } n \in \left[0, N_{\text{sync}} - 1\right]$$

$$(2)$$

als Basissequenz zu verstehen ist.

Dabei steht:

| | |
|---|---|
| i | für einen Index verschiedener Frequenzkomponenten des Synchronisationssignals, |
| Mf | für eine maximale Anzahl der Frequenzkomponenten, |
| Ai | für eine Amplitude der i-ten Frequenzkomponente, |
| $\omega$i | für eine Frequenz der i-ten Frequenzkomponente, |
| $\varphi_i$ | für eine initiale Phase der i-ten Frequenzkomponente, |
| fs | für eine Aktualisierungsfrequenz, |
| n | für n = t*fs mit t als Zeit, |
| Nsync | für einen zeitlichen Abstand zwischen den Wiederholungen der Basissequenzen, |
| Nrepeat | für eine maximale Anzahl der Basisfrequenzen. |

Die Basisfrequenz STx,basic wiederholt sich somit periodisch. In anderen Worten besteht das Synchronisationssignal STx aus einer Folge von Basissequenzen, nämlich Nrepeat mal wird die Basissequenz wiederholt. Nach den Nrepeat Wiederholungen ist die Sequenz abgeschlossen und eine erneute Sequenz folgt erst in einem nächsten, zeitlichen beanstandeten Zeitraum. Zwischen den Zeiträumen sind Pausen vorgesehen. In jedem Zeitraum kann somit eine Sequenz ausgesandt werden. Vorzugsweise richtet sich die Länge des Synchronisierungssignals nach der halben Periodendauer des Energieübertragungssignals.

Die Zusammensetzung des Synchronisationssignals aus verschiedenen Frequenzkomponenten wird vor allem im digitalen Bereich durchgeführt und anschließend durch Digital-Analog-Wandler ausgegeben. Ist Mf = 1, besteht das Synchronisationssignal nur aus einer Sinuswelle, während es bei Mf = 2 bereits aus zwei Sinuswellen zusammengefasst ist. fs ist die Abtastrate und entspricht der Aktualisierungsrate des Digital-Analog-Wandlers und besagt, mit welcher Frequenz der Output, sprich die Signalanteile, aus denen das Synchronisationssignals zusammengesetzt ist, ausgegeben wird. Die Abtastrate kann zwischen 20 MHz und 80 MHz, beispielsweise 50 MHz, betragen.

Das Synchronisationssignal STx wird mittels des Digital-Analog-Wandlers auf der Sendeseite in ein Wechselstromsignal umgewandelt, wobei mittels der Synchronisationsspule auf der ersten Seite auf Basis des Wechselstromsignals ein alternierendes Magnetfeld erzeugt wird. Dieses wird mittels der Synchronisationsspule der Empfangsseite empfangen und ein Wechselspannungssignal erzeugt wird. Dieses Wechselspannungssignal entspricht dem Synchronisationssignal SRx der Empfangsseite.

Das Synchronisationssignal SRx der Empfangsseite kann wie folgt definiert sein:

$$s_{\text{Rx}}(n + k \cdot N_{\text{sync}}) = s_{\text{Rx,basic}}(n) \text{ für } k \in \left[0, N_{\text{repeat}} - 1\right]$$

$$(3)$$

wobei

$$s_{\text{Rx,basic}}(n) = \Sigma_{i=1}^{M_f} A_i^{\#} \sin\left(\omega_i \frac{n}{f_s} + \varphi_i^{\#}\right) \text{ for } n \in \left[0, N_{\text{sync}} - 1\right]$$

$$(4)$$

als Basissequenz zu verstehen ist.

Insbesondere hat sich durch das Nahfeld und die induktive Übertragung sowohl die Amplitude als auch die Phase verändert, sodass

$A_i^{\#}$     für eine Amplitude der i-ten Frequenzkomponente, und

$\varphi_i^{\#}$     für eine verschobene Phase der i-ten Frequenzkomponente.

Im Detail verändert sich das versandte und empfangene Signal durch eine Spannungstransferfunktion, die sowohl eine Phasenverschiebung als auch eine Amplitudenphasenvariation bewirken kann.

Mittels einer Autokorrelationsfunktion kann nun ein Synchronisationszeitpunkt bestimmt werden. Der Synchronisationszeitpunkt dient dazu, Steuersignale der leistungselektronischen Einheit der Empfangsseite zurückzusetzen und somit mit Steuersignalen der leistungselektronischen Einheit der Sendeseite hinsichtlich der Schaltfrequenz zu synchronisieren. Die Steuersignale beziehen sich insbesondere auf eine Umschaltfrequenz der leistungselektronischen Einheit. Vor allem werden die Schalter der leistungselektronischen Einheit abwechselnd abhängig von der entsprechenden Wechselspannung angesteuert, um alle Signalanteile zu berücksichtigen. In anderen Worten beziehen sich die Steuersignale auf die Zeitpunkte, zu denen die Schalter der leistungselektronischen Einheit umgeschaltet werden, um diese mit den Steuersignale der sendeseitigen leistungselektronischen Einheit zu synchronisieren und somit auf den gleichen Zeitpunkt zu beziehen.

Der Synchronisationszeitpunkt ist insbesondere das zeitliche Ende des Synchronisationssignals, sprich das Ende der oben beschriebenen Sequenz. Wie oben erklärt wird das Synchronisationssignal für Zeiträume übertragen, die zeitlich beabstandet sind. Ein entsprechendes Ende des Synchronisationssignals, bevor eine entsprechende Pause zwischen den Zeiträumen eintritt, kann mittels der Autokorrelationsfunktion bestimmt werden.

Vor allem wird die Autokorrelationsfunktion dazu verwendet auf Basis des Synchronisationssignals der Empfangsseite eine Autokorrelationssignal zu bestimmen. Dabei wird der Verlauf des Autokorrelationssignals beobachtet. Das Autokorrelationssignal wird beim Erreichen des Endes des Synchronisationssignals eines Zeitraumes abfallen, wobei dieses Abfallen festgestellt werden kann. Insbesondere kann das Signal um einen vordefinierten Schwellenwert abfallen. Im Detail wird dadurch, dass das Signal um die Basissequenz wiederholt wird, die Autokorrelationsfunktion ein Maximum ergeben, das beim Erreichen des Endes des Synchronisationssignals eines Zeitraumes abklingt.

Konkret kann auf Basis des Synchronisationssignals der Empfangsseite ein Autokorrelationssignal Sdetection mittels der folgenden Autokorrelationsfunktion ermittelt werden:

$$s_{\text{detection}}(n) = \sum_{m=0}^{N_{\text{sync}}-1} s_{\text{Rx}}\big(n + m - N_{\text{sync}}\big) \cdot s_{\text{Rx}}(n + m)$$

$$(5)$$

Wie der Gleichung anzusehen ist, werden Werte des Synchronisationssignals auf der Empfangsseite mit einem Abstand von Nsync miteinander verglichen. Dadurch, dass Nsync der Abstand der Wiederholung ist, sollte das Autokorrelationsfunktion maximal sein, beziehungsweise mindestens konstant sein, bis das Synchronisationssignal abfällt.

Wenn man die Werte für SRx aus Gleichung 3 in Gleichung 5 einsetzt, erkennt man, dass das Autokorrelationssignal Sdetection insbesondere der folgenden Gleichung entspricht:

$$s_{\text{detection}}(n) = 2 \cdot N_{\text{sync}} \cdot \Sigma_{i=1}^{M_f} (A_i^{\#})^2 \ \text{für } n \in \big[N_{\text{sync}}, N_{\text{sync}} \cdot N_{\text{repeat}} - 1\big]$$

$$(6)$$

Das Autokorrelationssignal entspricht somit einem festen Wert, solange das Synchronisationssignal nicht abfällt.

Insbesondere kann das Verfahren eine Definition eines Anfangsschwellenwertes, einer Minimalzeit und eines Endschwellenwertes umfassen. Der Synchronisationszeitpunkt kann bspw. erkannt werden, wenn das Autokorrelationssignal unter den Endschwellenwert abfällt. Der Zeitpunkt, zu dem diese Bedingung erfüllt ist, kann vor allem als Synchronisationszeitpunkt definiert sein. Ferner kann die Bedingung strenger ausgelegt werden. Der Synchronisationszeitpunkt kann dann vorliegen, wenn das Autokorrelationssignal für zumindest eine Minimalzeit einen Anfangsschwellenwert übersteigt und dann unter den Endschwellenwert sinkt. Erneut ist der Synchronisationszeitpunkt der konkrete Zeitpunkt des Abfalls unter den Endschwellenwert.

Insbesondere können die vorgenannten Parameter auf Basis des Autokorrelationssignals der Sequenz eines ersten Zeitraumes, zu dem das Synchronisationssignal übertragen wird, definiert oder dynamisch angepasst werden, falls diese bereits vorab definiert wurden. Wie oben beschrieben gibt Gleichung 6 die Amplitude und somit eine Höhe einer Plattform des Autokorrelationssignals an, solange die Sequenz anhält. Insbesondere kann zunächst ein erster Zeitraum der Übertragung des Synchronisationssignals, das heißt die erste Sequenz, abgewartet werden. Es kann dann die Amplitude des Autokorrelationssignals und somit die Höhe der entsprechenden Plattform festgestellt werden, um die vorgenannten Parameter zu definieren bzw. dynamisch anzupassen. Bspw. können die Parameter wie folgt definiert werden:

Anfangsschwellenwert: 0,8 * der zuletzt angegeben Gleichung, nämlich Gleichung 6,
Minimalzeit = 0,5 * Nsync/fs und
Endschwellenwert = 0,8 * der zuletzt angebenden Gleichung, nämlich Gleichung 6.

Die Parameter können somit dynamisch dem Einzelfall und der konkreten Anwendung angepasst werden. Dabei kann die erste Synchronisationszeitspanne nicht zum Synchronisieren, sondern zum Setzen der Parameter, verwendet und bspw. erst der zweite Zeitraum, in anderen Worten die zweite Sequenz, und die darauffolgenden Sequenzen zum Synchronisieren verwendet werden.

Die Genauigkeit der Synchronisierung ist vor allem durch die Pulsweite des Synchronisationssignals bestimmt. Insbesondere kann Nsync länger gewählt werden, um die Genauigkeit der Synchronisation zu erhöhen. Insbesondere kann Nsync mindestens 5, vorzugsweise mindestens 10, am meisten bevorzugt mindestens 16, sein. Vorzugsweise kann Nsync weniger als 30, vorzugsweise weniger als 25, am meisten bevorzugt weniger als 20 betragen.

Vorliegend wird eine Synchronisierung erreicht, ohne dass die Stromstärke der zweiten Seite hierfür herangezogen wird. Es entfallen somit auch die entsprechenden Nachteile der Instabilität und der kostenintensiven und komplexen Ausbildung zur Überwachung und Kompensation der Stromstärke. Diese Nachteile resultieren insbesondere davon, dass sekundärseitig der Strom eine Amplitude von mehreren zehn oder sogar 100 Ampere und eine entsprechend hohe Frequenz von bis zu 85 kHz oder sogar bis zu mehreren MHz aufweist. Die entsprechenden Komponenten des Schaltungskreises müssen kostenintensiv und kompliziert ausgebildet sein. Ferner kann im Stand der Technik nur eine Synchronisation der Sekundärspannung mit dem Strom auf der Empfangsseite gewährleistet werden, jedoch keine direkte Synchronisierung mit der Sendeseite. Aufgrund der Verzerrung durch Bandbreitenbegrenzungen des Stromsenders und die zeitliche Verzögerung beispielsweise durch entsprechenden Analog-Digital-Wandlern ist die Strombasierte Synchronisierung deutlich unpräziser.

## Kurze Beschreibung der Figuren

Es zeigen in rein schematischer Darstellung

Figur 1    eine Vorrichtung zur kontaktlosen induktiven Energieübertragung;

Figur 2    eine perspektivische Ansicht der Energieübertragungsspulen und Synchronisationsspulen der Vorrichtung nach Figur 1;

Figur 3    einen detaillierteren Schaltkreis der Vorrichtung der Figur 1;

Figur 4    ein Zeitdiagramm der Steuersignale der sendeseitigen und empfangsseitigen leistungselektronischen Einheit;

Figur 5    einen Überblick über ein Autokorrelationssignal und die Bestimmung des Synchronisationszeitpunktes; und

Figur 6:    ein Verfahrensdiagramm eines Verfahrens zur kontaktlosen induktiven Energieübertragung.

## Bevorzugte Ausführungsformen

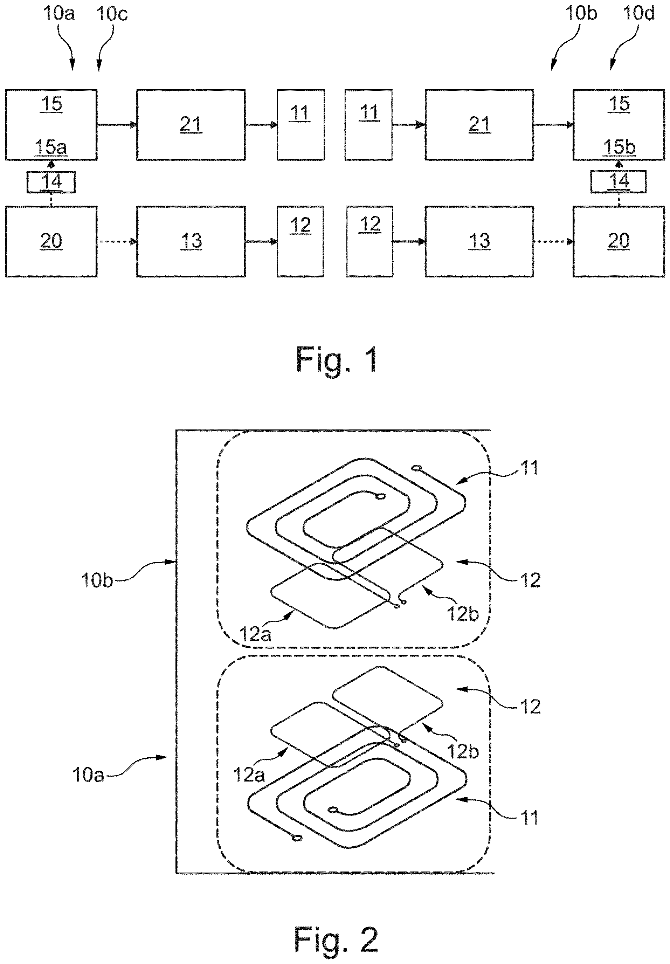

Figur 1 zeigt eine Vorrichtung 10 zur kontaktlosen induktiven Energieübertragung, wobei die Vorrichtung 10 eine erste Seite 10a und eine zweite Seite 10b aufweist. Im vorliegenden Fall fungiert die erste Seite 10a als Sendeseite 10c und die zweite Seite 10b als Empfangsseite 10d. Es sind jedoch beide Seiten derart ausgebildet, dass sie sowohl als Sendeseite als auch als Empfangsseite agieren können.

Die Vorrichtung 10 weist auf jeder Seite eine Energieübertragungsspule 11 und eine Synchronisationsspule 12 auf. Jede Seite weist eine Steuereinheit 20 auf. Auf der ersten Seite 10a ist eine Signalquelle 14 zur Erzeugung von Energie vorgesehen. Dabei handelt es sich um ein Gleichstromsignal, das mittels einer leistungselektronischen Einheit 15, der im vorliegenden Fall als Inverter 15a agiert, in ein Wechselstromsignal umgewandelt wird. Dieses Wechselstromsignal kann durch einen Kompensationsschaltkreis 21 zur Energieübertragungsspule 11 gelangen, wobei auf Basis der erzeugten Energie ein alternierendes Magnetfeld erzeugt wird, das von der Energieübertragungsspule 11 auf der ersten Seite 10a zur Energieübertragungsspule 11 der zweiten Seite 10b induktiv übertragen wird. Auch auf der zweiten Seite 10b ist ein Kompensationsschaltkreis 21, den das Signal durchläuft, bis es mittels einer leistungselektronischen Einheit 15, der auf der zweite Seite 10b als Gleichrichter 15b agiert, in ein Gleichspannungssignal umgewandelt wird. Auf der zweiten Seite 10b ist ebenfalls eine Signalquelle 14 zur Erzeugung von Energie vorgesehen.

In der unteren Hälfte zeigt Figur 1 einen Schaltkreis 13 zum Erzeugen und Empfangen des Synchronisationssignals auf beiden Seiten. In Figur 1 dient der linke Schaltkreis 13 zum Erzeugen des Synchronisationssignals, das dann mittels der Synchronisationsspule 12 der ersten Seite 10a zur Synchronisationsspule 12 der zweiten Seite 10b induktiv übertragen wird und dann durch den entsprechenden Schaltkreis 13 auf der gegenüberliegenden Seite empfangen wird und an die Steuereinheit 20 weitergegeben wird.

Figur 2 zeigt eine perspektivische Ansicht der entsprechenden Spulen der Vorrichtung 10 nach Figur 1 auf beiden Seiten. Auf der ersten Seite 10a als auch auf der zweiten Seite 10b sind sowohl eine Energieübertragungsspule 11 als auch eine Synchronisationsspule 12 angeordnet. Dabei ist die Synchronisationsspule 12 derart ausgebildet, dass diese eine erste Seite 12a und eine zweite Seite 12b aufweist, wobei die Seite derart ausgebildet sind, dass ein auf einer Seite erzeugtes magnetisches Feld eine unterschiedliche magnetische Polarität aufweist als ein auf der anderen Seite erzeugtes magnetisches Feld. Insbesondere sind die Windungen derart ausgebildet und zur Energieübertragungsspule derselben Seite angeordnet, dass bei einer Energieübertragung mittels der Energieübertragungsspule auf beiden Seiten der Synchronisationsspule eine magnetische Spannung induziert, wobei sich die Spannungsanteile ausgleichen.

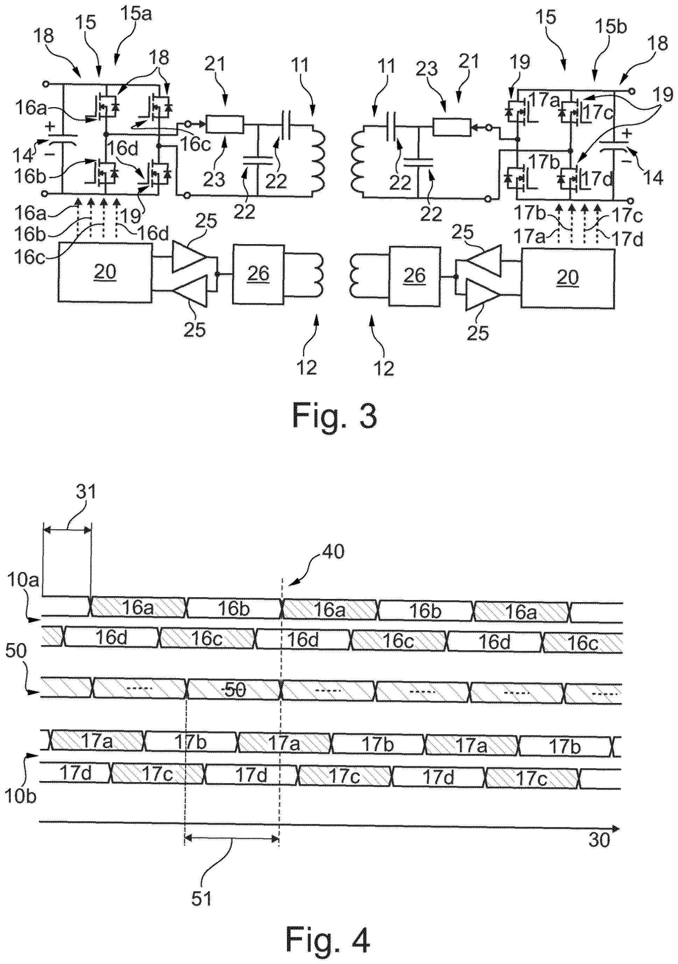

In Figur 3 sieht man einen detaillierteren Schaltkreis der Vorrichtung der Figur 1. Deutlich ist auf jeder Seite die Signalquelle 14 für Energie zu sehen. Geht man davon aus, dass die erste Seite 10a hier als Sendeseite 10c agiert, erzeugt die Signalquelle 14 Energie, die durch die leistungselektronische Einheit 15, der hier als Inverter 15a agiert, in ein Wechselstromsignal umgewandelt wird. Dafür weicht die leistungselektronische Einheit vier Schalter 19, und zwar Transistoren, auf und ist als Vollbrückenwandler 18 ausgebildet. Deutlich ist zu sehen, wie Steuersignale 16a, 16b, 16c und 16d von der Steuereinheit 20 die leistungselektronischen Einheit 15, und zwar die einzelnen Schalter 19, ansteuern.

Als nächstes folgt ein Kompensationsschaltkreis 21, der zwei Kondensatoren 22 und einen induktiven Widerstand 23 aufweist. Ein Kondensator ist in Reihe mit dem induktiven Widerstand 23 und der Energieübertragungsspule 11 geschaltet, während ein weiterer Kondensator 22 parallel zu der Energieübertragungsspule 11 geschaltet ist.

Als nächstes folgt die Energieübertragungsspule 11, die ein alternierendes Magnetfeld erzeugt, das dann von der Energieübertragungsspule 11 der zweiten Seite 10b empfangen wird, wobei hier ebenfalls ein Kompensationsschaltkreis 21 analog zu dem der ersten Seite 10a ausgebildet ist. Auch dieser weist entsprechend zwei Kondensatoren 22 und einen induktiven Widerstand 23 auf. Als nächstes folgt die leistungselektronische Einheit 15 der zweiten Seite 10b, der hier als Gleichrichter 15b agiert. Deutlich sind wieder die Steuersignale 17a, 17b, 17c und 17d für die leistungselektronischen Einheit 15 auf der zweiten Seite 10b zu sehen, die von der entsprechenden Steuereinheit 20 auf der Seite ausgehen.

Auf der unteren Seite ist der Schaltkreis 13 zum Erzeugen und Empfangen des Synchronisationssignals auf beiden Seiten zu sehen. Dieser umfasst mindestens einen Digital-Analog-Wandler 25 und kann ferner eine Frequenzzweiche 26 umfassen. Das Synchronisationssignal besteht aus unterschiedlichen Frequenzanteilen. Das Synchronisationssignals wird mittels der Synchronisationsspule 12 auf der ersten Seite 10a mittels Induktion zur entsprechenden Synchronisationsspule 12 der zweiten Seite 10b übertragen. Dort befindet sich derselbe Schaltkreis 13.

Die Vorrichtung 10 ist komplett symmetrisch ausgebildet ist, sodass die zweite Seite 10b ebenfalls als Sendeseite 10c und die erste Seite 10a ebenfalls als Empfangsseite 10d agieren kann. Es handelt sich somit um ein bidirektionales System.

In Figur 3 sind die entsprechenden Steuersignale 16a, 16b, 16c, 16d der leistungselektronischen Einheit der ersten Seite 10a und die entsprechenden Steuersignale 17a, 17b, 17c, 17d der leistungselektronischen Einheit 15 der zweiten Seite 10b auf einer Skala hinsichtlich der Zeit 30 dargestellt. Diese sind den einzelnen Schaltern 19 zugeordnet.

Deutlich ist zu sehen, dass die Signale hinsichtlich des Schalters an der gleichen Stelle im Vollbrückenwandler, d.h. 16a zu 17a, 16b zu 17b etc., zeitversetzt sind, nämlich um einen Versatz 31. Die Periodendauer der Energie ergibt sich aus dem zeitlichen Abstand zweier zeitlich aufeinander folgenden Steuersignal desselben Schalters (so bspw. der Abstand zwischen zwei Steuersignalen 16a). Aus dem Abstand gleicher benachbarten Steuersignale lässt sich die Schaltfrequenz bestimmen. So entspricht das Inverse des zeitlichen Abstandes zwischen zweier Signale 16a der Schaltfrequenz für den entsprechenden Schalter. Diese Schaltfrequenz soll nach der Synchronisation mit der bezüglich des entsprechenden Schalters auf der Sendeseite, die dem Inversen des zeitlichen Abstandes zwischen zweier Signale 17a entspricht, identisch sein.

In der Mitte zwischen den Steuersignalen ist das Synchronisationssignal 50, das auf der Empfangsseite empfangen wird, dargestellt. Und zwar wird dieses für einen ersten Zeitraum 51 übertragen und von der Empfangsseite 10d empfangen.

Es gilt nun, das Ende des Synchronisationssignals 50 und somit das Ende des ersten Zeitraumes 51 bestimmen, um den Synchronisationszeitpunkt 40 festzustellen. Ist der Synchronisationszeitpunkt 40 festgestellt, kann der der leistungselektronischen Einheit 15 beziehungsweise dessen Steuersignale 17a, 17b, 17c, 17d zurückgesetzt werden, sodass diese dann mit den Steuersignalen 16a, 16b, 16c, 16d der ersten Seite hinsichtlich der Schaltfrequenz synchron sind. Der Zeitversatz 31 stört somit die Synchronisation nicht, sondern die Schaltfrequenz zwischen den Signalen der Sendeseite 10c und der Empfangsseite 10d soll nach der Synchronisation identisch sein.

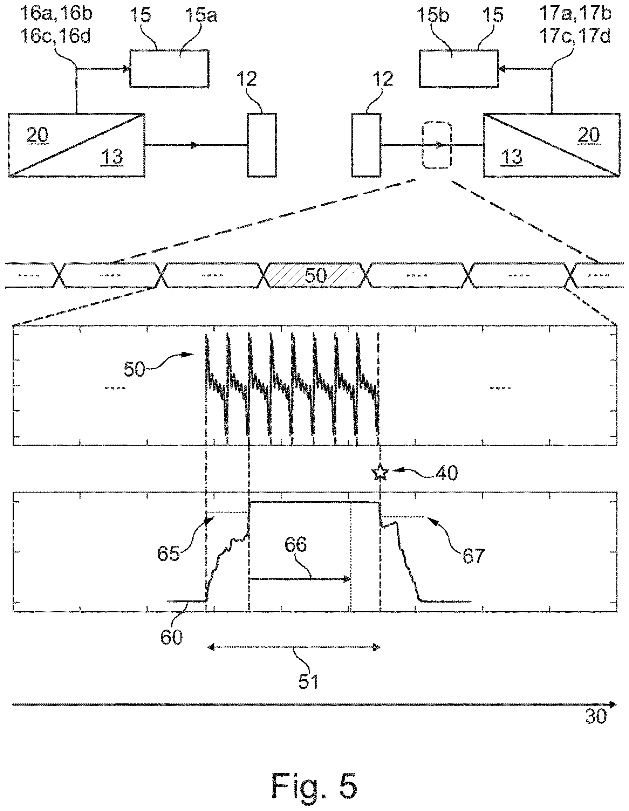

In Figur 5 ist ein Überblick über ein Autokorrelationssignal 60 und die Bestimmung des Synchronisationszeitpunktes 40 zu sehen. Beide sind erneut über die Zeit 30 aufgetragen. In der Mitte der Figur ist erneut zu sehen, wie für einen ersten Zeitraum 51 ein Synchronisationssignal 50 gesandt und empfangen wird. Das Synchronisationssignal besteht aus 8 wiederholten Sequenzen. Auf Basis des empfangenden Synchronisationssignals wird mittels einer Autokorrelationsfunktion ein Autokorrelationssignal 60 bestimmt, das in dem unteren Graphen zu sehen ist. Es sind die Parameter Anfangsschwellwert 65, Minimalzeit 66 und Endschwellwert 67 gezeigt. Deutlich ist zu sehen, wie das Autokorrelationssignal 60 über den Anfangsschwellwert ansteigt, und zwar länger als die Minimalzeit 66, und dann unter den Endschwellwert 67 wieder fällt. Das Erfüllen dieser drei Parameter kennzeichnet den Synchronisationszeitpunkt 40, der in der entsprechenden Steuereinheit 20 auf der Empfangsseite 10d zum Ansteuern der leistungselektronischen Einheit 15 der zweiten Seite verwendet wird.

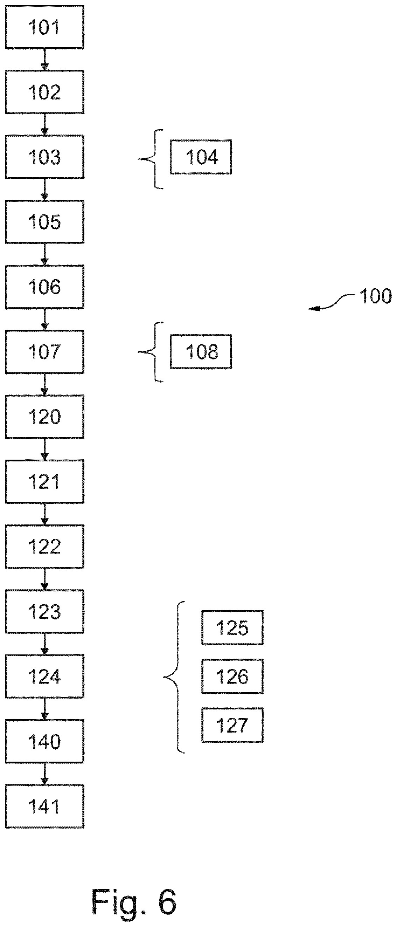

In Figur 6 ist ein Verfahrensschema eines Verfahrens 100 zur kontaktlosen induktiven Energieübertragung gezeigt. Das Verfahren 100 verwendet 101 eine oben beschriebene

Vorrichtung. Es wird zunächst Energie erzeugt 102, und zwar mittels einer entsprechenden Signalquelle 14. Die Energie wird in ein Wechselstromsignal mittels einer leistungselektronischen Einheit 15 auf der Sendeseite 10c umgewandelt 103. Hierzu wird die leistungselektronischen Einheit 15 entsprechend angesteuert 104 mittels entsprechender Steuersignale 16a, 16b, 16c, 16d. Auf Basis des Wechselspannungssignals wird mittels der Energieübertragungsspule 11 der Sendeseite 10c ein alternierendes Magnetfeld erzeugt 105 und mittels der Energieübertragungsspule 11 der anderen Seite empfangen und auf Basis von diesem ein Wechselspannungssignal erzeugt 106. Dieses Wechselspannungssignal wird in ein Gleichspannungssignal mittels der leistungselektronischen Einheit 15 auf der Empfangsseite 10d umgewandelt 107. Hierzu wird die entsprechende leistungselektronische Einheit der Empfangsseite angesteuert 108.

Es wird ein Synchronisationssignal erzeugt 120 und auf Basis von diesem wird ein alternierendes Magnetfeld erzeugt 121 und auf der Empfangsseite empfangen und daraus ein Wechselspannungssignal erzeugt 122 mittels der entsprechenden Synchronisationsspulen. Auf Basis des empfangenen Synchronisationssignals wird ein Autokorrelationssignal erzeugt 123 mittels einer Autokorrelationsfunktion. Es wird ein Synchronisationszeitpunkt 40 auf Basis des Autokorrelationssignals bestimmt 124, und zwar kann zuvor ein Endschwellenwert definiert werden 125, ferner kann ein Anfangsschwellenwert und eine Minimalzeit definiert werden 126. Diese können auch dynamisch angepasst werden 127. Ist der Synchronisationszeitpunkt 40 bestimmt 124, können die Steuersignale 17a, 17b, 17c, 17d der leistungselektronischen Einheit 15 der zweiten Seite 10b zurückgesetzt werden 140 und somit die Steuersignale der beiden leistungselektronischen Einheiten der unterschiedlichen Seiten hinsichtlich der Schaltfrequenz synchronisiert werden 141.

**Bezugszeichenliste**

| | |
|---|---|
| 10 | Vorrichtung zur kontaktlosen induktiven Energieübertragung |
| 10a | erste Seite |
| 10b | zweite Seite |
| 10c | Sendeseite |
| 10d | Empfangsseite |
| 11 | Energieübertragungsspule |
| 12 | Synchronisationsspule |
| 12a | erste Seite |
| 12b | zweite Seite |
| 13 | Schaltkreis zum Erzeugen und Empfangen des Synchronisationssignals |
| 14 | Signalquelle für Energie |
| 15 | leistungselektronischen Einheit |
| 15a | Inverter |
| 15b | Gleichrichter |
| 16a, 16b, | Steuersignale der leistungselektronischen Einheit der ersten Seite |
| 16c, 16d 17a, 17b, | Steuersignale der leistungselektronischen Einheit der zweiten Seite |
| 17c, 17d 18 | Vollbrückenwandler |
| 19 | Schalter |
| 20 | Steuereinheit |
| 21 | Kompensationsschaltkreis |
| 22 | Kondensator |

| 23 | induktiver Widerstand |
|---|---|
| 25 | Digital-Analog-Wandler |
| 26 | Frequenzweiche |
| 30 | Zeit |
| 31 | Versatz |
| 40 | Synchronisationszeitpunkt |
| 50 | Synchonisationssignal RTx der Empfangsseite |
| 51 | erster Zeitraum |
| 60 | Autokorrelationssignal |
| 65 | Anfangsschwellwert |
| 66 | Minimalzeit |
| 67 | Endschwellwert |
| 100 | Verfahren zur kontaktlosen induktiven Energieübertragung |
| 101 | Verwendung einer Vorrichtung |
| 102 | Erzeugen von Energie |
| 103 | Umwandeln der Energie in ein Wechselstromsignal mittels einer leistungselektronischen Einheit auf der Sendeseite |
| 104 | Ansteuern der leistungselektronischen Einheit auf der Sendeseite |
| 105 | Erzeugen eines alternierenden Magnetfelds auf Basis des Wechselstromsignals mittels der Energieübertragungsspule auf der Sendeseite |
| 106 | Empfangen des alternierenden Magnetfelds und Erzeugen eines Wechselspannungssignals auf Basis des empfangenden alternierenden Magnetfelds mittels der Energieübertragungsspule auf der Empfangsseite |
| 107 | Umwandeln des Wechselspannungssignals in ein Gleichspannungssignal mittels einer leistungselektronischen Einheit auf der Empfangsseite |
| 108 | Ansteuern der leistungselektronischen Einheit auf der Empfangsseite |
| 120 | Erzeugen eines Synchronisationssignals |
| 121 | Erzeugen eines alternierenden Magnetfelds auf Basis des Synchronisationssignals mittels der Synchronisationsspule |
| 122 | Empfangen des alternierenden Magnetfelds und Erzeugen eines Wechselspannungssignals als Synchronisationssignal der Empfangsseite auf Basis des empfangenden alternierenden Magnetfelds mittels der Synchronisationsspule auf der Empfangsseite |
| 123 | Erzeugen eines Autokorrelationssignals mittels einer Autokorrelationsfunktion |
| 124 | Bestimmen eines Synchronisationszeitpunktes auf Basis des Autokorrelationssignals |
| 125 | Definition eines Endschwellenwertes |
| 126 | Definition eines Anfangsschwellenwertes und einer Minimalzeit |
| 127 | dynamische Anpassung des Endschwellenwertes, Anfangsschwellenwertes und einer Minimalzeit |
| 140 | Zurücksetzen von Steuersignalen der leistungselektronischen Einheit der zweiten Seite |
| 141 | Synchronisieren der Steuersignals der leistungselektronischen Einheit der zweiten Seite mit den Steuersignalen der leistungselektronischen Einheit der ersten Seite |

**Patentansprüche**

1. Vorrichtung (10) zur kontaktlosen induktiven Energieübertragung,
   **dadurch gekennzeichnet, dass**

   die Vorrichtung (10) eine erste Seite (10a) und eine zweite Seite (10b) umfasst, wobei die Vorrichtung (10) auf der ersten Seite (10a) und auf der zweiten Seite (10b) jeweils eine Energieübertragungsspule (11) und eine Synchronisationsspule (12) umfasst,
   wobei die Energieübertragungsspulen (11) jeweils zur induktiven Übertragung und zum Empfangen von Energie ausgebildet sind,
   wobei die Synchronisationsspulen (12) jeweils zur induktiven Übertragung und zum Empfangen eines Synchronisationssignals ausgebildet sind,
   sodass die erste Seite (10a) und die zweite Seite (10b) der Vorrichtung (10) als Sendeseite (10c) zum Übertragen kontaktlos zu übertragener Energie und als Empfangsseite (10d) zum Empfangen kontaktlos übertragener Energie ausgebildet sind.

**2.** Vorrichtung (10) nach Anspruch 1,
**dadurch gekennzeichnet, dass**

die Synchronisationsspulen (12) jeweils eine erste Seite (12a) und eine zweite Seite (12b) umfassen, wobei die Synchronisationsspulen (12) jeweils derart geformt sind, dass ein auf der ersten Seite (12a) erzeugtes magnetisches Feld eine unterschiedliche magnetische Polarität aufweist als ein auf der zweiten Seite (12b) erzeugtes magnetisches Feld.

**3.** Vorrichtung (10) nach Anspruch 1 oder 2,
**dadurch gekennzeichnet, dass**

die erste Seite (10a) und die zweite Seite (10b) jeweils eine leistungselektronische Einheit (15) umfassen, wobei das Synchronisationssignal zur Synchronisierung von Steuersignalen (17a, 17b, 17c, 17d) der leistungselektronischen Einheit (15) auf einer Empfangsseite (10d) der Vorrichtung (10) bezüglich Steuersignalen (16a, 16b, 16c, 16d) der leistungselektronischen Einheit (15) auf einer Sendeseite (10c) der Vorrichtung (10) dient.

**4.** Vorrichtung (10) nach Anspruch 3,
**dadurch gekennzeichnet, dass**
die leistungselektronischen Einheiten (15) als Vollbrückenwandler (18) mit vier Schaltern (19) ausgebildet sind.

**5.** Verfahren (100) zur kontaktlosen induktiven Energieübertragung,
**dadurch gekennzeichnet, dass**
das Verfahren (100) eine Vorrichtung (10) nach einem der Ansprüche 1 und 4 verwendet.

**6.** Verfahren (100) nach Anspruch 5,
**dadurch gekennzeichnet, dass**

die erste Seite (10a) als Sendeseite (10c) und die zweite Seite (10b) als Empfangsseite (10d) verwendet wird, wobei auf der Sendeseite (10c) ein moduliertes periodisches Synchronisationssignal STx für in Abständen folgende Zeiträume erzeugt wird.

**7.** Verfahren (100) nach Anspruch 6,
**dadurch gekennzeichnet, dass**

das Synchronisationssignal STx entsprechend der folgenden Gleichung moduliert wird:

$$s_{\text{Tx}}\left(n + k \cdot N_{\text{sync}}\right) = s_{\text{Tx,basic}}(n) \text{ für } k \in \left[0, N_{\text{repeat}} - 1\right]$$

wobei

$$s_{\text{Tx,basic}}(n) = \Sigma_{i=1}^{M_f} A_i \sin\left(\omega_i \frac{n}{f_s} + \varphi_i\right) \text{ for } n \in \left[0, N_{\text{sync}} - 1\right]$$

als Basissequenz zu verstehen ist, und
wobei

i als Index verschiedener Frequenzkomponenten des Synchronisationssignals,
Mf als eine maximale Anzahl der Frequenzkomponenten,
Ai als eine Amplitude der i-ten Frequenzkomponente,
ωi als eine Frequenz der i-ten Frequenzkomponente,
$\varphi_i$ für eine initiale Phase der i-ten Frequenzkomponente,
fs als eine Aktualisierungsfrequenz,
n als n = t*fs mit t als Zeit,
Nsync als zeitlicher Abstand zwischen den Wiederholungen der Basissequenzen, und
Nrepeat als maximale Anzahl der Basissequenzen zu verstehen ist.

**8.** Verfahren (100) nach einem der Ansprüche 5 bis 7,

**dadurch gekennzeichnet, dass**

Energie auf der ersten Seite erzeugt wird (102),
wobei Energie mittels einer leistungselektronischen Einheit (15) auf der ersten Seite (10a) in ein Wechselstromsignal umgewandelt wird (103),
wobei mittels der Energieübertragungsspule (11) auf der ersten Seite (10a) auf Basis des Wechselstromsignals ein alternierendes Magnetfeld erzeugt wird (105), wobei die Energieübertragungsspule (11) der zweiten Seite (10b) das alternierende Magnetfeld empfängt und auf Basis diesen ein Wechselspannungssignal erzeugt (106),
wobei das Wechselspannungssignal mittels einer leistungselektronischen Einheit (15) auf der zweiten Seite (10b) in ein Gleichspannungssignal umgewandelt wird (107).

9. Verfahren (100) nach einem der Ansprüche 6 bis 8,
**dadurch gekennzeichnet, dass**

mittels der Synchronisationsspule (12) der ersten Seite (10a) auf Basis des Synchronisationssignal Stx ein alternierendes Magnetfeld erzeugt (121), wobei die Synchronisationsspule (12) der zweiten Seite (10b) das alternierende Magnetfeld empfängt und auf Basis von diesem ein Wechselspannungssignal erzeugt (122), wobei das Wechselspannungssignal dem Synchronisationssignal Rtx der Empfangsseite (10d) entspricht.

10. Verfahren (100) nach Anspruch 9,
**dadurch gekennzeichnet, dass**

das Synchronisationssignal RTx der Empfangsseite (10d) wie folgt definiert ist:

$$s_{\text{Rx}}\left(n + k \cdot N_{\text{sync}}\right) = s_{\text{Rx,basic}}(n) \text{ für } k \in \left[0, N_{\text{repeat}} - 1\right]$$

wobei

$$s_{\text{Rx,basic}}(n) = \Sigma_{i=1}^{M_f} A_i^\# \sin\left(\omega_i \frac{n}{f_s} + \varphi_i^\#\right) \text{ for } n \in \left[0, N_{\text{sync}} - 1\right]$$

als Basissequenz zu verstehen ist,
wobei

$A_i^\#$ für eine Amplitude der i-ten Frequenzkomponente, und
$\varphi_i^\#$ für eine verschobene Phase der i-ten Frequenzkomponente steht.

11. Verfahren (100) nach einem der Ansprüche 9 oder 10,
**dadurch gekennzeichnet, dass**

auf Basis des Synchronisationssignal RTx der Empfangsseite (10d) mittels einer Autokorrelationsfunktion ein Autokorrelationssignal (60) erzeugt wird (123),
wobei mittels des Autokorrelationssignals (60) ein Synchronisationszeitpunkt (40) bestimmt wird (124),
wobei zum Synchronisationszeitpunkt (40) Steuersignale (17a, 17b, 17c, 17d) der leistungselektronischen Einheit (15) der Empfangsseite (10d) zurückgesetzt werden (140) und somit mit den Steuersignalen (16a, 16b, 16c, 16d) der leistungselektronischen Einheit (15) der Sendeseite (10c) synchronisiert werden (141).

12. Verfahren (100) nach Anspruch 11,
**dadurch gekennzeichnet, dass**
als Autokorrelationsfunktion verwendet wird:

$$s_{\text{detection}}(n) = \sum_{m=0}^{N_{\text{sync}}-1} s_{\text{Rx}}(n + m - N_{\text{sync}}) \cdot s_{\text{Rx}}(n + m)$$

13. Verfahren (100) nach einem der Ansprüche 11 oder 12,
**dadurch gekennzeichnet, dass**
das Verfahren (100) eine Definition (125) eines Endschwellenwertes (67) umfasst, wobei der Synchronisationszeitpunkt (40) erkannt wird, wenn das Autokorrelationssignal (60) unter den Endschwellenwert (67) abfällt.

14. Verfahren (100) nach Anspruch 13,
**dadurch gekennzeichnet, dass**

das Verfahren (100) eine Definition (125) eines Anfangsschwellenwertes (65) und einer Minimalzeit (66) umfasst, wobei der Synchronisationszeitpunkt (40) erkannt wird, wenn das Autokorrelationssignal (60) für zumindest die Minimalzeit (66) den Anfangsschwellenwert (65) übersteigt und unter den Endschwellenwert (67) abfällt.

15. Verfahren (100) nach einem der Ansprüche 13 oder 14,
**dadurch gekennzeichnet, dass**
der Anfangsschwellenwertes (65), die Minimalzeit (66) und der Endschwellenwertes (67) auf Basis des Autokorrelationssignals (60) eines ersten Zeitraumes (51) definiert werden.

Fig. 1

Fig. 2

Fig. 3

Fig. 4

EP 4 531 241 A1

Fig. 5

15

Fig. 6

Europäisches
Patentamt

European
Patent Office

Office européen
des brevets

# EUROPÄISCHER RECHERCHENBERICHT

**Nummer der Anmeldung**

EP 24 19 5853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/145468 A1 (BELLM MATHIAS [DE] ET AL) 11. Mai 2023 (2023-05-11) * Absätze [0002] - [0005], [0055], [0082], [0086] * | 1-15 | INV. H02J50/12 H02J50/80 |
| A | US 2022/376560 A1 (GONDA MARTIN [DE] ET AL) 24. November 2022 (2022-11-24) * Absätze [0006], [0035], [0036]; Abbildung 2 * | 1-15 | |
| A | US 2021/249889 A1 (MAO YUNHE [CN] ET AL) 12. August 2021 (2021-08-12) * Absätze [0002], [0067], [0072], [0073], [0079], [0084]; Abbildung 4 * | 1-15 | |
| A | DULEEPA J. THRIMAWITHANA ET AL: "A Synchronization Technique for Bidirectional IPT Systems", IEEE TRANSACTIONS ON INDUSTRIAL ELECTRONICS, Bd. 60, Nr. 1, 1. Januar 2013 (2013-01-01), Seiten 301-309, XP055559575, USA ISSN: 0278-0046, DOI: 10.1109/TIE.2011.2174536 * Abbildungen 1,3 * | 1-15 | **RECHERCHIERTE SACHGEBIETE (IPC)** H02J |
| A | CN 115 085 401 A (UNIV CENTRAL SOUTH) 20. September 2022 (2022-09-20) * Abbildung 1 * | 1-15 | |

Der vorliegende Recherchenbericht wurde für alle Patentansprüche erstellt

| Recherchenort | Abschlußdatum der Recherche | Prüfer |
|---|---|---|
| München | 4. Februar 2025 | Hanisch, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 19 5853

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2025

| Im Recherchenbericht angeführtes Patentdokument | Datum der Veröffentlichung | Mitglied(er) der Patentfamilie | Datum der Veröffentlichung |
|---|---|---|---|
| US 2023145468 A1 | 11-05-2023 | CN 116094190 A | 09-05-2023 |
| | | DE 102021212550 A1 | 11-05-2023 |
| | | EP 4178075 A1 | 10-05-2023 |
| | | KR 20230067526 A | 16-05-2023 |
| | | US 2023145468 A1 | 11-05-2023 |
| US 2022376560 A1 | 24-11-2022 | CN 114402502 A | 26-04-2022 |
| | | DE 102019214047 A1 | 18-03-2021 |
| | | EP 4032167 A1 | 27-07-2022 |
| | | US 2022376560 A1 | 24-11-2022 |
| | | WO 2021052672 A1 | 25-03-2021 |
| US 2021249889 A1 | 12-08-2021 | CN 111386646 A | 07-07-2020 |
| | | EP 3866303 A1 | 18-08-2021 |
| | | JP 7104249 B2 | 20-07-2022 |
| | | JP 2022509325 A | 20-01-2022 |
| | | KR 20210082244 A | 02-07-2021 |
| | | US 2021249889 A1 | 12-08-2021 |
| | | WO 2020087360 A1 | 07-05-2020 |
| CN 115085401 A | 20-09-2022 | KEINE | |

EPO FORM P0461

Für nähere Einzelheiten zu diesem Anhang : siehe Amtsblatt des Europäischen Patentamts, Nr.12/82